# FASCICULE DE BREVET EUROPEEN

(11) **EP 2 970 684 B1**
(45) Date de publication et mention de la délivrance du brevet: **22.04.2020**
(21) Numéro de dépôt: 14715355.5
(22) Date de dépôt: 10.03.2014
(51) Int. Cl.: C09D 4/06, C08K 7/14, C08L 33/12, C08L 35/06, C08F 220/08, C08F 220/14, B29K 105/08, B29C 70/48, B29K 33/00, B29K 309/08, C08J 5/24, C08F 265/06

(54) **SIROP (METH) ACRYLIQUE LIQUIDE D'IMPREGANTION D'UN SUBSTRAT FIBREUX, PROCEDE D'IMPREGNATION D'UN SUBSTRAT FIBREUX, MATERIAU COMPOSITE OBTENU APRES POLYMERISATION DUDIT SUBSTRAT PRE-IMPREGNE**
FLÜSSIG(METH)ACRYLSIRUP ZUM IMPRÄGNIEREN EINES FASERSUBSTRATS, VERFAHREN ZUM IMPRÄGNIEREN EINES FASERSUBSTRATS UND NACH DER POLYMERISATION DIESES VORIMPRÄGNIERTEN SUBSTRATS HERGESTELLTER VERBUNDWERKSTOFF
LIQUID (METH)ACRYLIC SYRUP FOR IMPREGNATING A FIBROUS SUBSTRATE, METHOD OF IMPREGNATING A FIBROUS SUBSTRATE, COMPOSITE MATERIAL OBTAINED FOLLOWING POLYMERISATION OF THE PRE-IMPREGNATED SUBSTRATE

(30) Priorité: 11.03.2013 FR 1352148
(43) Date de publication de la demande: 20.01.2016
(73) Titulaire: Arkema France, 92700 Colombes (FR)
(72) Inventeur: GERARD, Pierre, F-64230 Denguin (FR)
(86) Numéro de dépôt international: PCT/FR2014/050542
(87) Numéro de publication internationale: WO 2014/140467

(56) Documents cités:
- FR-A- 1 374 046
- US-A- 2 684 305

## Description

### [Domaine de l'invention]

La présente invention concerne un sirop (méth)acrylique liquide d'imprégnation d'un substrat fibreux.

Plus particulièrement, l'invention concerne un sirop liquide (méth)acrylique visqueux contenant principalement des composants méthacryliques ou acryliques et un composant destiné à rendre transparent/translucide un matériau composite comprenant un substrat fibreux à base de fibres de verre, et une matrice thermoplastique obtenue après polymérisation du sirop. L'invention concerne en outre un procédé d'imprégnation d'un substrat fibreux comportant des fibres de verre longues avec ledit sirop liquide visqueux. L'invention concerne également un substrat fibreux pré-imprégné avec ledit sirop qui est utile pour la fabrication de pièces composites.

La présente invention concerne également un procédé de fabrication de pièces composites et des pièces composites obtenues par ce procédé.

### [Art antérieur]

Les pièces mécaniques qui doivent tenir des contraintes élevées pendant leur utilisation, sont largement fabriquées à partir de matériaux composites. Un matériau composite est une combinaison macroscopique de deux matériaux non miscibles ou plus. Le matériau composite est constitué par au moins un matériau qui forme la matrice, c'est-à-dire une phase continue assurant la cohésion de la structure, et un matériau de renfort.

L'objectif, lors de l'utilisation d'un matériau composite, est d'obtenir des performances qui ne sont pas disponibles avec chacun de ses constituants lorsqu'ils sont utilisés séparément. Par conséquent, des matériaux composites sont largement utilisés dans plusieurs secteurs industriels tels que par exemple la construction, l'automobile, l'aérospatial, les transports, les loisirs, l'électronique et le sport, notamment en raison de leurs meilleures performances mécaniques (résistance à la traction supérieure, module de traction supérieur, ténacité à la rupture supérieure) et de leur faible densité, en comparaison des matériaux homogènes.

La classe la plus importante, au regard du volume à l'échelle industrielle commerciale, est celle des composites à matrices organiques, dans lesquels le matériau de matrice est généralement un polymère. La matrice d'un matériau composite polymère est soit un polymère thermoplastique, soit un polymère thermodurcissable.

Les polymères thermodurcissables consistent en des structures tridimensionnelles réticulées. Afin de préparer le matériau composite polymère, un prépolymère est mélangé avec l'autre composant, tel que des billes ou fibres de verre, ou l'autre composant est mouillé ou imprégné et cuit ultérieurement. Des exemples de prépolymères ou de matériau de matrice pour polymères thermodurcissables sont les polyesters insaturés, les esters de vinyle, les matériaux époxy ou phénoliques. Le chauffage des chaînes polymères permet de réticuler et de durcir le matériau de manière permanente.

Un inconvénient majeur d'une matrice polymère thermodurcissable est sa réticulation. La matrice ne peut pas facilement être façonnée en d'autres formes. Une fois le polymère réticulé, la forme est fixée. Ceci rend également difficile le recyclage du matériau composite thermodurcissable et des pièces ou articles mécaniques ou structurés fabriqués comprenant ledit matériau composite thermodurcissable, qui sont brûlés dans une cimenterie ou jetés dans une décharge.

Pour permettre le thermoformage et le recyclage, on préfère utiliser les polymères thermoplastiques.

Les polymères thermoplastiques consistent en des polymères linéaires ou ramifiés qui ne sont pas réticulés. Les polymères thermoplastiques sont chauffés afin de mélanger les constituants nécessaires pour la fabrication du matériau composite et sont refroidis pour figer la forme finale. Le problème est la viscosité très importante de ses polymères thermoplastiques fondus.

Afin de préparer un matériau composite polymère à base de polymère thermoplastique, une résine polymère thermoplastique à l'état fondu, communément appelée « sirop », est utilisée pour imprégner le matériau de renfort, par exemple un substrat fibreux. Un sirop répondant à ce problème a été mis au point par la Demanderesse et est décrit dans les demandes de brevet N° FR1159553, ou son extension PCT WO2013/056845 et dans la demande de brevet N° FR1256929 ou son extension PCT WO2014/013028. Une fois polymérisé, le sirop polymère thermoplastique constitue la matrice du matériau composite. Au moment de l'imprégnation, la viscosité du sirop d'imprégnation doit être maitrisée et adaptée pour ne pas être trop fluide ou trop visqueuse, de manière à imprégner correctement chaque fibre du substrat fibreux. Lorsque le mouillage est partiel, selon que le sirop est trop fluide ou trop visqueux, il apparait respectivement des zones « à nu », c'est-à-dire non imprégnées, et des zones où il se forme des gouttes de polymère sur les fibres qui sont à l'origine de la création de bulles. Ces zones « à nu » et ces bulles engendrent l'apparition de défauts dans le matériau composite final qui sont à l'origine, entre autre, d'une perte de résistance mécanique du matériau composite final.

Un besoin se fait sentir de plus en plus, notamment dans le secteur du bâtiment, d'avoir des éléments transparents ou translucides. Ces éléments peuvent être des éléments de toitures, ou de façades ou encore des parois pour des bâtiments. Lorsqu'il n'y a pas d'exigence sur la rigidité mécanique, les matériaux utilisés sont des thermoplastiques transparents tel que polyméthacrylate de méthyle.

Il existe à ce jour, des matériaux composites transparents en polymère thermodurcissable. On peut citer par exemple, un matériau commercialisé sous la marque déposée Acrylit G10. Cependant, ce matériau composite est constitué d'une résine acrylique polyester renforcée par des fibres de verre. Le matériau est donc un composite thermodurcissable qui n'est ni thermoformable ni recyclable. De plus, ce matériau composite résiste très mal aux rayonnements UV puisqu'il jaunit après environ un an d'exposition. Ce matériau ne convient donc pas pour un usage extérieur, notamment pour la réalisation d'éléments de toiture ou de façades de bâtiments.

Dés lors que les éléments à réaliser doivent présenter une résistance mécanique, on préfère utiliser un matériau composite.

### [Problème technique]

L'invention a donc pour but de remédier à au moins un des inconvénients de l'art antérieur.

L'invention vise notamment à proposer une pièce en matériau composite thermoplastique transparente / translucide.

L'invention vise en outre à mouiller complètement, correctement et de manière homogène le substrat fibreux pendant l'imprégnation. Tout défaut du mouillage des fibres par exemple par des bulles et des vides diminue les performances mécaniques de la pièce composite finale et ses capacités à obtenir une transmission totale de la lumière (pertes liées à la diffusion de la lumière par les défauts du matériau).

Un autre objectif de la présente invention est de proposer un procédé qui peut être réalisé à faible coût et qui permet une fabrication, à l'échelle industrielle, de pièces composites thermoplastiques. Par ailleurs, le procédé doit être facile et simple à mettre en œuvre en utilisant des composés disponibles dans le commerce. La fabrication des pièces composites doit également être reproductible et rapide, ce qui signifie des temps de cycle courts.

### [Brève description de l'invention]

De manière surprenante, il a été découvert qu'un sirop (meth) acrylique liquide d'imprégnation d'un substrat fibreux, selon la révendication 1, ledit substrat fibreux étant constitué de fibres de verre longues d'indice de réfraction n1, ledit sirop d'imprégnation étant caractérisé en ce qu'il comprend :
a) un monomère (méth)acrylique,
b) au moins un composant, d'indice de réfraction n3, tel que n3 ≥ n1,
ledit sirop (meth)acrylique ayant un indice de réfraction n4 qui tend vers n1 et une viscosité dynamique comprise entre 10 mPa*s et 10 000 mPa*s, de préférence entre 50 mPa*s et 5 000 mPa*s et avantageusement entre 100 mPa*s et 1 000 mPa*s, fournit une imprégnation complète et correcte du substrat fibreux et une transparence du matériau composite obtenu après polymérisation dudit substrat pré-imprégné, le taux de transmission de la lumière étant compris entre 50% et 100%, de préférence supérieur à 70%.

De manière surprenante, la demanderesse a également découvert qu'un procédé d'imprégnation pour l'imprégnation d'un substrat fibreux, ledit matériau fibreux étant constitué de fibres de verre longues, les fibres ayant un facteur de forme d'au moins 1 000, de préférence d'au moins 1 500, de manière davantage préférée d'au moins 2 000, avantageusement d'au moins 3 000, le plus avantageusement d'au moins 5 000, encore plus avantageusement d'au moins 6000, toujours plus avantageusement d'au moins 7500 et le plus avantageusement d'au moins 10 000 et ledit procédé comprenant une étape d'imprégnation dudit substrat fibreux avec ledit sirop (méth)acrylique liquide d'imprégnation, fournit une imprégnation complète et correcte du substrat fibreux et un substrat transparent après polymérisation, le taux de transmission de la lumière étant compris entre 50% et 100%, de préférence supérieur à 70%.

Étonnamment, il a en outre été découvert qu'un procédé de fabrication de pièces composites comprenant les étapes suivantes :
a) l'imprégnation d'un substrat fibreux en fibres de verre longues d'indice de réfraction n1 avec un tel sirop (méth)acrylique liquide,
b) la polymérisation du sirop (méth)acrylique liquide imprégnant ledit substrat fibreux,
permet d'obtenir des pièces composites thermoplastiques présentant des propriétés de transparence, avec un taux de transmission de la lumière compris entre 50% et 100%, de préférence supérieur à 70%, et très résistantes aux rayonnements UV.

### [Description détaillée de l'invention]

Le terme « substrat fibreux » tel qu'utilisé se rapporte à des tissus, des feutres ou des non-tissés qui peuvent être sous la forme de bandes, de nappes, de tresses, de mèches ou de pièces.

Le terme « fibre longue » tel qu'utilisé se rapporte à des fibres ayant un facteur de forme d'au moins 1 000, de préférence d'au moins 1 500, de manière davantage préférée d'au moins 2 000, avantageusement d'au moins 3 000, le plus avantageusement d'au moins 5 000, encore plus avantageusement d'au moins 6000, toujours plus avantageusement d'au moins 7500 et le plus avantageusement d'au moins 10 000.

Le terme « (méth)acrylique » tel qu'utilisé se rapporte à tout type de monomères acryliques et méthacryliques.

Le terme « PMMA » tel qu'utilisé se rapporte aux homo- et copolymères de méthacrylate de méthyle (MMA), le rapport en poids de MMA dans le PMMA étant d'au moins 70 % en poids pour le copolymère de MMA.

Le terme « monomère » tel qu'utilisé se rapporte à une molécule qui peut subir une polymérisation.

Le terme « SMA » tel qu'il est utilisé se rapporte au styrène anhydride maléique copolymère.

Le terme « polymérisation tel qu'utilisé se rapporte au procédé de transformation d'un monomère ou d'un mélange de monomères en un polymère.

Le terme « polymère thermoplastique » tel qu'utilisé se rapporte à un polymère qui se transforme en un liquide ou devient plus liquide ou moins visqueux lorsqu'il est chauffé et qui peut prendre de nouvelles formes par l'application de chaleur et de pression.

Le terme « polymère thermodurcissable » tel qu'utilisé se rapporte à un prépolymère à un état souple, solide ou visqueux qui se transforme de manière irréversible en un réseau polymère insoluble et infusible par cuisson.

Le terme « composite polymère » tel qu'utilisé se rapporte à un matériau multicomposant comprenant plusieurs domaines de phase différents, parmi lesquels au moins un type de domaine de phase est une phase continue et dans lequel au moins un composant est un polymère.

Le terme « transparent ou translucide » tel qu'utilisé concerne un matériau ayant un taux de transmission total de la lumière visible compris entre 50% et 100%, de préférence supérieur à 70% , selon les mesures de la transmission lumineuse définies par la norme de mesure ASTM D 1003

Le terme « transmission de la lumière » tel qu'il est utilisé comprend la transmission des ondes du spectre visible et infra rouge à savoir la lumière dont la longueur d'onde est entre 380nm et 780nm.

Le terme « indice de réfraction » est relatif aux indices de réfraction n1, n2, n3, n4 des milieux traversés par la lumière du spectre visible .

Selon un premier aspect, la présente invention concerne un sirop (méth)acrylique liquide d'imprégnation d'un substrat fibreux, ledit substrat fibreux étant constitué de fibres de verre longues d'indice de réfraction n1 et ledit sirop étant caractérisé en ce qu'il comprend:
a) un monomère (méth)acrylique,
b) au moins un composant, d'indice de réfraction n3, tel que n3 ≥ n1,
ledit sirop (meth)acrylique ayant un indice de réfraction n4 qui tend vers n1 et une viscosité dynamique comprise entre 10 mPa*s et 10 000 mPa*s, de préférence entre 50 mPa*s et 5 000 mPa*s et avantageusement entre 100 mPa*s et 1 000 mPa*s.

**En ce qui concerne le monomère (méth) acrylique,** le monomère est choisi parmi l'acide acrylique, l'acide méthacrylique, les monomères acryliques d'hydroxyalkyle, les monomères méthacryliques d'hydroxyalkyle, les monomères acryliques d'alkyle, les monomères méthacryliques d'alkyle et leurs mélanges.

De préférence, le monomère est choisi parmi l'acide acrylique, l'acide méthacrylique, les monomères acryliques d'hydroxyalkyle, les monomères méthacryliques d'hydroxyalkyle, les monomères acryliques d'alkyle, les monomères méthacryliques d'alkyle et leurs mélanges, le groupe alkyle contenant de 1 à 22 carbones, linéaires, ramifiés ou cycliques; le groupe alkyle contenant de préférence 1 à 12 carbones, linéaires, ramifiés ou cycliques.

Avantageusement, le monomère (méth)acrylique est choisi parmi le méthacrylate de méthyle, le méthacrylate d'éthyle, l'acrylate de méthyle, l'acrylate d'éthyle, l'acide méthacrylique, l'acide acrylique, l'acrylate de n-butyle, l'acrylate d'isobutyle, le méthacrylate de n-butyle, le méthacrylate d'isobutyle, l'acrylate de cyclohexyle, le méthacrylate de cyclohexyle, l'acrylate d'isobornyle, le méthacrylate d'isobornyle, l'acrylate d'hydroxyethyle, le méthacrylate d'hydroxyethyle et leurs mélanges.

Plus avantageusement, le monomère (méth)acrylique est choisi parmi le méthacrylate de méthyle, l'acrylate d'isobornyle ou l'acide acrylique et leurs mélanges.

Selon un mode de réalisation préféré, au moins 50% en poids, de préférence au moins 60% en poids du monomère est le méthacrylate de méthyle.

Selon un mode de réalisation davantage préféré, au moins 50 % en poids, de préférence au moins 60 % en poids, de manière davantage préférée au moins 70 % en poids et avantageusement au moins 80 % en poids et encore plus avantageusement 90 % en poids du monomère est un mélange de méthacrylate de méthyle avec de l'acrylate d'isobornyle et/ou de l'acide acrylique.

**En ce qui concerne le polymère (méth) acrylique,** on peut mentionner les polyméthacrylates d'alkyle ou les polyacrylates d'alkyle. Selon un mode de réalisation préféré, le polymère (méth)acrylique est le polyméthacrylate de méthyle (PMMA).

Le terme « PMMA » désigne un homopolymère ou copolymère de méthacrylate de méthyle (MMA) ou leurs mélanges.

Selon un mode de réalisation, l'homo- ou le copolymère de méthacrylate de méthyle (MMA) comprend au moins 70%, de préférence au moins 80 %, avantageusement au moins 90% et plus avantageusement au moins 95% en poids de méthacrylate de méthyle.

Selon un autre mode de réalisation, le PMMA est un mélange d'au moins un homopolymère et d'au moins un copolymère de MMA, ou un mélange d'au moins deux homopolymères ou deux copolymères de MMA ayant un poids moléculaire moyen différent, ou un mélange d'au moins deux copolymères de MMA ayant une composition de monomères différente.

Le copolymère de méthacrylate de méthyle (MMA) comprend de 70% à 99,7 % en poids de méthacrylate de méthyle et de 0,3 à 30 % en poids d'au moins un monomère contenant au moins une insaturation éthylénique qui peut copolymériser avec le méthacrylate de méthyle.

Ces monomères sont bien connus et on peut notamment mentionner les acides acrylique et méthacrylique et les (méth)acrylates d'alkyle dans lesquels le groupe alkyle contient de 1 à 12 atomes de carbone. À titre d'exemple, on peut mentionner l'acrylate de méthyle et le (méth)acrylate d'éthyle, de butyle ou de 2-éthylhexyle. De préférence, le comonomère est un acrylate d'alkyle dans lequel le groupe alkyle contient de 1 à 4 atomes de carbone.

Selon un mode de réalisation préféré, le copolymère de méthacrylate de méthyle (MMA) comprend de 80 % à 99,7 %, avantageusement de 90% à 99,7 % et plus avantageusement de 90% à 99,5 % en poids de méthacrylate de méthyle et de 0,3 % à 20 %, avantageusement de 0,3 % à 10 % et plus avantageusement de 0,5% à 10 % en poids d'au moins un monomère contenant au moins une insaturation éthylénique qui peut copolymériser avec le méthacrylate de méthyle. De préférence, le comonomère est choisi parmi l'acrylate de méthyle ou l'acrylate d'éthyle ou leurs mélanges.

La masse moléculaire moyenne en poids du polymère (méth)acrylique doit être élevée, ce qui signifie supérieure à 50 000 g/mol, de préférence supérieure à 100 000 g/mol.

la masse moléculaire moyenne en poids peut être mesurée par chromatographie d'exclusion stérique (SEC en anglais).

L'indice de réfraction n2 du polymère (méth)acrylique est de 1,48 à 1,50, de préférence de 1,485 à 1,495 et plus avantageusement de 1,487 à 1,493.

Le polymère (méth)acrylique est complètement soluble dans le monomère (méth)acrylique ou dans le mélange de monomères (méth)acryliques. Il permet d'augmenter la viscosité du monomère (méth)acrylique ou du mélange de monomères (méth)acryliques. La solution obtenue est généralement nommée « sirop » ou « prépolymère ». La valeur de la viscosité dynamique du sirop (méth)acrylique liquide est comprise entre de 10 mPa*s et 10 000 mPa*s, de préférence entre 50 mPa*s et 5 000 mPa*s et avantageusement entre 100 mPa*s et 1 000 mPa*s. La viscosité du sirop peut facilement être mesurée avec un rhéomètre ou un viscosimètre. La viscosité dynamique est mesurée à 25 °C. Le sirop (méth)acrylique liquide a un comportement newtonien, ce qui signifie qu'il n'y a pas de dilution sous cisaillement, de sorte que la viscosité dynamique est indépendante du cisaillement dans un rhéomètre ou de la vitesse du mobile dans un viscosimètre. Une telle viscosité du sirop obtenu permet une imprégnation correcte des fibres du substrat fibreux.

Avantageusement, le sirop (méth)acrylique liquide ne contient pas de solvant ajouté volontairement supplémentaire.

Le sirop (méth)acrylique liquide selon l'invention, destiné à imprégner le substrat fibreux, comprend notamment a) un monomère (méth)acrylique ou un mélange de monomères (méth)acryliques, et b) au moins un composé destiné à rendre la matrice polymère thermoplastique obtenue après polymérisation du sirop, transparente.

**En ce qui concerne le composant b)** il est choisi parmi des composants ayant un indice de réfraction n3, tel que n3> n2 et pouvant être mélangé au polymère (méth)acrylique ou au mélange polymère (méth)acrylique et monomère (méth)acrylique et permettant d'avoir une viscosité dynamique comprise entre 10 mPa*s et 10 000 mPa*s, de préférence entre 50 mPa*s et 5 000 mPa*s et avantageusement entre 100 mPa*s et 1 000 mPa*s.

Ce composant **b)** est choisi parmi :
- du polymère styrène anhydride maléique (SMA) présent à hauteur d'au moins 10% en poids, de préférence d'au moins 15 %, avantageusement d'au moins 20 % et plus avantageusement d'au moins 25 % en poids du sirop (méth)acrylique liquide total,
- pour être complètement miscible dans le sirop (meth)acrylique et garder cette miscibilité lors de la polymérisation du sirop, c'est-à-dire avoir une résine thermoplastique transparente, le polymère de styrène anhydride maléïque doit contenir entre 15 et 50% de monomère anhydride maléïque, de préférence entre 20 et 35%
   ou
- du styrène, présent à hauteur d'au moins 10% en poids , de préférence d'au moins 15 %, avantageusement d'au moins 20 % et plus avantageusement d'au moins 25 % en poids du sirop (méth)acrylique liquide total.

Afin de conserver une viscosité dynamique du sirop (méth)acrylique telle qu'elle permet une bonne imprégnation du substrat fibreux, et de conserver les propriétés thermoplastiques de la matrice obtenue après polymérisation du substrat fibreux pré-imprégné de sirop, le ou les composants du sirop sont incorporés avec les pourcentages massiques suivants :

Le monomère (méth)acrylique ou les monomères (méth)acryliques dans le sirop (méth)acrylique liquide sont présents à hauteur d'au moins 90 % en poids, de préférence de 85 % en poids, avantageusement de 80 % en poids et plus avantageusement de 75 % en poids du sirop (méth)acrylique liquide total,
Le ou les polymères (méth)acryliques dans le sirop (méth)acrylique liquide sont présents à hauteur d'au moins 10 % en poids, de préférence d'au moins 15 %, avantageusement d'au moins 20 % et plus avantageusement d'au moins 25 % en poids du sirop (méth)acrylique liquide total.

**Lorsque le composant b) choisi, est du styrène anhydride maléique,** le sirop comprend plus particulièrement :
a) de 70% en poids à 80 % en poids d'un monomère (méth)acrylique,
b) de 20 % en poids à 30% en poids de styrène anhydride maléique.

**S'agissant du procédé de fabrication du sirop (méth)acrylique liquide, avec le polymère SMA styrène anhydride maléique,**
- une première étape consiste à préparer un premier sirop comprenant le monomère (méth)acrylique ou mélange de monomères (méth)acrylique;
- le polymère SMA styrène anhydride maléique, est ensuite ajouté dans le monomère, dans les proportions indiquées ci-dessus pour conserver une viscosité dynamique comprise entre 10 mPa*s et 10 000 mPa*s, de préférence entre 50 mPa*s et 5 000 mPa*s et avantageusement entre 100 mPa*s et 1 000 mPa*s.

Ce polymère, grâce à la présence de ses fonctionnalités anhydride maléique, est miscible dans le polymère (meth)acrylique. Son indice de réfraction n3 est de 1.565 à 1.585, de préférence de 1.57 à 1.582 et plus avantageusement de 1.574 à 1.580 et supérieur à n2, n2 étant l'indice du polymère (meth)acrylique. Leur mélange dans les proportions ci-dessus permet d'obtenir un sirop (meth)acrylique d'indice de réfraction n4. De plus, ce polymère présente une viscosité similaire au polymère (meth) acrylique.

**Lorsque le composant b) choisi est du styrène,** le sirop comprend plus particulièrement :
a) de 50% en poids à 80 % en poids d'un monomère (méth)acrylique,
b) de 10 % en poids à 25% en poids de styrène
c) de 10 à % en poids à 25 % en poids d'un polymère (méth)acrylique,
De préférence, le syrop comprend :
a) de 50% en poids à 80 % en poids d'un monomère (méth)acrylique,
b) de 10 % en poids à 45% en poids de styrène.
c) de 2,5 % en poids à 30 % en poids d'un polymère (méth)acrylique,
d) de 2,5% en poids à 30 % en poids d'un copolymère (méth)acrylique-styrène,comprenant de 10% à 50% en poids de styrène.
Et, plus avantageusement , le syrop comprend :
a) de 50% en poids à 80 % en poids d'un monomère (méth)acrylique,
b) de 10 % en poids à 40% en poids de styrène.
c) de 5 % en poids à 30 % en poids d'un polymère (méth)acrylique,
d) de 5% en poids à 30 % en poids d'un copolymère (méth)acrylique-styrène, comprenant de 10% à 50% en poids de styrène.

**S'agissant du procédé de fabrication du sirop (méth)acrylique liquide, avec le styrène,**
- une première étape consiste à préparer un premier sirop comprenant le monomère (méth)acrylique ou mélange de monomères (méth)acrylique et un polymère (méth)acrylique ;
- puis on rajoute le styrène dans les proportions indiquées ci-dessus pour conserver une viscosité dynamique comprise entre 10 mPa*s et 10 000 mPa*s, de préférence entre 50 mPa*s et 5 000 mPa*s et avantageusement entre 100 mPa*s et 1 000 mPa*s.

Au moment de la polymérisation ultérieure du sirop, le styrène et le monomère (meth)acrylique forment alors un copolymère (méth)acrylique-styrène, dont l'indice de réfraction n3 varie en fonction du nombre de motifs styrène dans la chaine polymère du polymère (meth)acrylique en formation.

De plus, dans ce cas où on incorpore du styrène dans le sirop (meth)acrylique, il est possible de remplacer en tout ou partie le polymère (meth)acrylique, utilisé pour augmenter la viscosité du monomère ou mélange de monomère (meth)acrylique, par un copolymère (méth)acrylique-styrène. De préférence, ce copolymère est du polyméthacrylate -co-styrène, comprenant de 10% à 50% en poids de styrène.

Le sirop (méth)acrylique liquide d'imprégnation comprend également un initiateur ou un système initiateur pour démarrer la polymérisation du monomère ou des monomères. On peut mentionner les initiateurs ou les systèmes initiateurs qui sont activés par la chaleur.

L'initiateur activé par la chaleur est de préférence un initiateur radicalaire.

En ce qui concerne l'initiateur radicalaire, il peut être choisi parmi les peroxydes de diacyle, les peroxyesters, les peroxydes de dialkyle, les peroxyacétals ou les composés azo.

Pour démarrer la polymérisation du monomère ou des monomères, l'initiateur ou le système initiateur est choisi parmi le carbonate d'isopropyle, le peroxyde de benzoyle, le peroxyde de lauroyle, le peroxyde de caproyle, le peroxyde de dicumyle, le perbenzoate de tert-butyle, le per(2-éthylhexanoate) de tert-butyle, l'hydroperoxyde de cumyle, le 1,1-di(tert-butylperoxy)-3,3,5-triméthylcyclohexane, le peroxyisobutyrate de tert-butyle, le peracétate de tert-butyle, le perpivalate de tert-butyle, le perpivalate d'amyle, le peroctoate de tert-butyle, l'azobisisobutyronitrile (AIBN), l'azobisisobutyramide, le 2,2'-azobis(2,4-diméthylvaléronitrile) ou l'acide 4,4'-azobis(4-cyanopentanoïque). L'utilisation d'un mélange d'initiateurs radicalaires choisis dans la liste ci-dessus ne sortirait pas de la portée de l'invention.

De préférence, pour démarrer la polymérisation du monomère ou des monomères, l'initiateur ou le système initiateur est choisi parmi les peroxydes contenant 2 à 20 atomes de carbone.

La teneur en initiateur radicalaire par rapport au monomère ou monomères du sirop (méth) acrylique liquide est de 100 à 50 000 ppm en poids (50 000 ppm = 5 % en poids), de préférence entre 200 et 40 000 ppm en poids et avantageusement entre 300 et 30 000 ppm en poids.

**En ce qui concerne le procédé d'imprégnation du substrat fibreux,** il comprend une étape d'imprégnation du substrat fibreux, à base de fibres de verres longues, avec le sirop (méth)acrylique liquide décrit précédemment. Cette étape d'imprégnation se fait dans un moule fermé.

Si la viscosité du sirop (méth)acrylique liquide à une température donnée est un peu trop élevée pour le procédé d'imprégnation, il est possible de chauffer le sirop afin d'avoir un sirop plus liquide pour le mouillage suffisant et l'imprégnation correcte et complète du substrat fibreux.

**S'agissant du substrat fibreux,** on peut mentionner les tissus de verre comprenant des fibres de verre obtenues à partir de silice ou de mélanges fondu après passage dans une filière. Le substrat peut se présenter sous forme de bandes, de nappes, de tresses, de mèches ou de pièces. Le matériau fibreux peut avoir différentes formes et dimensions, monodimensionnelles, bidimensionnelles ou tridimensionnelles. Un substrat fibreux comprend un assemblage d'une ou de plusieurs fibres. Lorsque les fibres sont continues, leur assemblage forme des tissus.

La forme monodimensionnelle correspond à des fibres longues linéaires. Les fibres peuvent être discontinues ou continues. Les fibres peuvent être agencées de manière aléatoire ou en parallèle les unes aux autres sous la forme d'un filament continu. Une fibre est définie par son facteur de forme, qui est le rapport entre la longueur et le diamètre de la fibre. Les fibres utilisées dans la présente invention sont des fibres longues ou des fibres continues en verre. Les fibres ont un facteur de forme d'au moins 1 000, de préférence d'au moins 1 500, de manière davantage préférée d'au moins 2 000, avantageusement d'au moins 3 000, le plus avantageusement d'au moins 5 000, encore plus avantageusement d'au moins 6000, toujours plus avantageusement d'au moins 7500 et le plus avantageusement d'au moins 10 000.

La forme bidimensionnelle correspond à des mats fibreux ou des renforts non tissés ou tissés ou des faisceaux de fibres, qui peuvent également être tressés. Même si la forme bidimensionnelle a une certaine épaisseur et par conséquent a en principe une troisième dimension, elle est considérée comme bidimensionnelle selon la présente invention.

La forme tridimensionnelle correspond par exemple à des mats fibreux ou des renforts non tissés ou des faisceaux de fibres ou leurs mélanges, empilés ou pliés, un assemblage de la forme bidimensionnelle dans la troisième dimension.

Les origines du matériau fibreux peuvent être naturelles ou synthétiques. En tant que matériau naturel, on peut mentionner les fibres végétales, les fibres de bois, les fibres animales ou les fibres minérales.

Des fibres naturelles sont par exemple le sisal, le jute, le chanvre, le lin, le coton, les fibres de noix de coco et les fibres de banane. Des fibres animales sont par exemple la laine ou les cheveux.

En tant que matériau synthétique, on peut mentionner des fibres polymères choisies parmi les fibres de polymères thermodurcissables, de polymères thermoplastiques ou leurs mélanges.

Les fibres polymères peuvent être constituées de polyamide (aliphatique ou aromatique), de polyester, d'alcool polyvinylique, de polyoléfines, de polyuréthanes, de polychlorure de vinyle, de polyéthylène, de polyesters insaturés, de résines époxy et d'esters de vinyle.

Les fibres minérales peuvent également être choisies parmi les fibres de verre, notamment de type E, R ou S2, les fibres de carbone, les fibres de bore ou les fibres de silice.

De préférence, le substrat fibreux choisi comprend des fibres de verre, notamment de type E, R ou S2, dont l'indice de réfraction n1 varie de 1,52 à 1,6. Avantageusement les fibres choisies sont des fibres S2 d'indice de réfraction 1,52.

Les fibres du substrat fibreux ont un diametre entre 0.005µm et 100µm, de préférence entre 1µm et 50µm, de manière davantage préférée entre 5µm et 30µm et avantageusement entre 10µm et 25µm.

De préférence les fibres du substrat fibreux de la présente invention sont choisies parmi les fibres continues (ce qui signifie que le facteur de forme n'est pas forcement applicable comme pour des fibres longues) pour la forme monodimensionnelle, ou pour des fibres longues ou continues pour la forme bidimensionnelle ou tridimensionnelle du substrat fibreux.

Selon un aspect supplémentaire, l'invention concerne un matériau composite polymère transparent comprenant une matrice (méth)acrylique thermoplastique et un substrat fibreux utilisé comme renfort, dans lequel le substrat fibreux est constitué de fibres de verre longues, ledit matériau composite étant caractérisé en ce que la matrice (méth)acrylique thermoplastique est obtenue après polymérisation dudit substrat fibreux pré-imprégné dudit sirop (méth)acryique liquide.

Un autre aspect de la présente invention est un procédé de fabrication de pièces ou produits mécaniques ou structurés comprenant les étapes suivantes :
a) l'imprégnation d'un substrat fibreux, ledit substrat fibreux étant constitué de fibres de verre longues, avec le sirop (méth)acrylique liquide,
b) la polymérisation du sirop (méth)acrylique liquide imprégnant ledit substrat fibreux.

L'imprégnation du substrat fibreux à l'étape a) est de préférence réalisée dans un moule fermé.

Avantageusement, l'étape a) et l'étape b) sont réalisées dans le même moule fermé.

Après la polymérisation du substrat à base de fibres de verre pré-imprégné de sirop, on obtient une pièce en matériau composite dont la matrice thermoplastique présente un indice de réfraction n4 qui tend vers celui n1 du substrat en fibres de verre. De préférence, l'indice de réfraction n4 de la matrice thermoplastique est identique à celui n1 du substrat en fibres de verre.

**En ce qui concerne la mesure de la transparence,** on utilise avantageusement la méthode de la transmission lumineuse selon la norme ASTM D 1003.

**En ce qui concerne le procédé de fabrication** de pièces composites, différents procédés pourraient être utilisés pour préparer des pièces. On peut mentionner l'infusion, le moulage en sac sous vide, le moulage en sac sous pression, le moulage en autoclave, le moulage par transfert de résine (RTM), le moulage par injection-réaction (RIM), le moulage par injection-réaction renforcé (R-RIM) et ses variantes, le moulage sous presse ou le moulage par compression.

Le plus avantageusement, le procédé de fabrication de pièces composites est choisi parmi le moulage par transfert de résine ou l'infusion.

Tous les procédés comprennent l'étape d'imprégnation du substrat fibreux avec le sirop (méth)acrylique liquide avant l'étape de polymérisation dans un moule.

L'étape de polymérisation du sirop (méth)acrylique liquide imprégnant ledit substrat fibreux a lieu après l'étape d'imprégnation dans le même moule.

Le moulage par transfert de résine est un procédé utilisant un ensemble de moulage à deux côtés qui forme les deux surfaces d'un matériau composite. Le côté inférieur est un moule rigide. Le côté supérieur peut être un moule rigide ou flexible. Des moules flexibles peuvent être fabriqués à partir de matériaux composites, de silicone ou de films polymères extrudés tels que le nylon. Les deux côtés s'emboîtent pour former une cavité de moulage. La caractéristique distinctive du moulage par transfert de résine est que le substrat fibreux est placé dans cette cavité et que l'ensemble de moulage est fermé avant l'introduction du sirop (méth)acrylique liquide. Le moulage par transfert de résine comprend de nombreuses variétés qui diffèrent au niveau de la mécanique d'introduction du sirop (méth)acrylique liquide dans le substrat fibreux dans la cavité de moulage. Ces variations vont de l'infusion sous vide au moulage par transfert de résine sous vide (VARTM). Ce procédé peut être réalisé à température ambiante ou élevée.

Avec le procédé d'infusion, le sirop (méth)acrylique liquide doit avoir la viscosité adaptée pour ce procédé de préparation du matériau composite polymère. Le sirop (méth)acrylique liquide est aspiré dans le substrat fibreux présent dans un moule spécial par application d'un léger vide. Le substrat fibreux est infusé et complètement imprégné par le sirop (méth)acrylique liquide.

Un avantage de ce procédé est la grande quantité de matériau fibreux dans le composite.

**En ce qui concerne l'utilisation des pièces composites** ainsi fabriquées, on peut mentionner les applications bâtiment, automobiles, les applications transport tels que le bus ou la camion, les applications nautiques, les applications ferroviaires, le sport, les applications aéronautiques et aérospatiales, les applications photovoltaïques, les applications informatiques, les applications pour la construction et le bâtiment, les applications pour les télécommunications et les applications pour l'énergie éolienne.

La pièce composite est notamment une pièce une pièce de construction ou de bâtiment (façades, panneaux, toitures), d'automobile, une pièce de bus, une pièce de bateau, une pièce de train, un article de sport, une pièce d'avion ou d'hélicoptère, une pièce de vaisseau spatial ou de fusée, une pièce de module photovoltaïque, un matériau pour la construction ou le bâtiment, une pièce d'éolienne, une pièce de meuble, une pièce de téléphone ou de téléphone portable, une pièce d'ordinateur ou de télévision, une pièce d'imprimante et de photocopieuse.

Les pièces en matériau composite obtenues après imprégnation d'un substrat fibreux avec le sirop (méth)acrylique et polymérisation sont transparentes (ou translucides). La matrice thermoplastique (meth)acrylique résiste très bien aux rayonnements UV si bien que ces pièces peuvent être utilisées en extérieur sans aucun problème. En ce qui concerne le recyclage de la pièce composite thermoplastique, il peut être réalisé par broyage ou dépolymérisation du polymère thermoplastique.

Le broyage est effectué mécaniquement afin d'obtenir des parties plus petites de la pièce. Puisque la pièce comprend un polymère thermoplastique, ce polymère peut être chauffé, et les pièces de nouveau transformées dans une certaine limite pour obtenir un objet recyclé.

De préférence, la pièce composite thermoplastique est chauffée pour réaliser une pyrolyse ou une décomposition thermique du PMMA et récupérer le méthacrylate de méthyle en tant que monomère.

Avantageusement, au moins 50 % en poids du MMA présent dans le polymère sont récupérés par décomposition thermique.

La pièce est portée à une température d'au moins 200 °C et inférieure ou égale à 400 °C.

### Exemple : Fabrication d'un matériau composite thermoplastique transparent.

Le sirop est préparé en dissolvant 25% en poids de PMMA (du Xiran® SMA28110 de la société Polyscope Polymers B.V, un copolymère de MMA comprenant de méthacrylate de méthyle, dans 75% en poids d'acrylate de méthyle , lequel est stabilisé avec du MEHQ (éther monométhylique d'hydroquinone).). A 100% en poids de sirop, sont incorporés 2% en poids de peroxyde benzolique (PBO- Luperox® A75 de ARKEMA) et 0,2% en poids de DMT (N,N-dimethyl-p-toludine de Sigma-Aldrich). Le sirop a une viscosité dynamyque de 520 mPa*s a 25°C. Le sirop est injecté dans un moule clos comprenant un tissu de verre comme substart fibreux et polymèrisé à 25°C pendant 80 minutes.

### 1^{ère} étape : préparation du sirop (meth)acrylique

Un sirop est préparé par dissolution de **25%** en poids de SMA (styrene anhydride maléïque) contenant 28% d'anhydride maléïque dans **75%** en poids de méthacrylate de méthyle, qui est stabilisé avec du MEHQ (éther monométhylique d'hydroquinone). Ce polymère se dissout dans le monomère méthacrylate de méthyle et il présente un indice de réfraction de 1,59.

Ces proportions de SMA dans le monomère méthacrylatye permettent d'obtenir un sirop présentant un indice de réfraction n4 proche de 1,52, et une viscosité dynamique à 25°C de 500 mPa.s .

### 2^{ème} étape : imprégnation d'un substrat fibreux et polymérisation

Un substrat fibreux en fibres de verre, présentant un indice de réfraction n1 égal à 1,52, est placé dans un moule fermé. Le sirop (meth)acrylique est injecté dans le moule fermé comprenant le tissus de verre et polymérisé à 25°C pendant 80 minutes.

La pièce composite thermoplastique obtenue présente une transparence de contact, laisse passer plus de 50% de la lumière et ne présente aucun défaut. De plus, cette pièce est très résistante aux rayonnements UV et peut donc être utilisée de manière intensive en extérieur. Elle est donc parfaitement adaptée pour équiper des toitures, ou des façades de bâtiments.

## Revendications

1. Sirop (meth)acrylique liquide d'imprégnation d'un substrat fibreux, ledit substrat fibreux étant constitué de fibres de verre longues d'indice de réfraction n1, ledit sirop d'imprégnation étant **caractérisé en ce qu'**il comprend :
a) un monomère (méth)acrylique,
b) au moins un composant, d'indice de réfraction n3, tel que n3 ≥ n1,
ledit sirop (meth)acrylique ayant un indice de réfraction n4 qui tend vers n1 et une viscosité dynamique comprise entre 10 mPa*s et 10 000 mPa*s, de préférence entre 50 mPa*s et 5 000 mPa*s et avantageusement entre 100 mPa*s et 1 000 mPa*s ; **en ce que** ledit au moins un composant b) est choisi parmi :
- du polymère styrène anhydride maléique présent à hauteur d'au moins 10% en poids du sirop (méth)acrylique liquide total ;
ou
- du styrène, présent à hauteur d'au moins 10% en poids du sirop (méth)acrylique liquide total.

2. Sirop (meth)acrylique liquide selon la revendication 1, **caractérisé en ce qu'**il comporte en outre :
c) un polymère (méth)acrylique, d'indice de réfraction n2.

3. Sirop (meth)acrylique liquide selon la revendication 1 ou 2, **caractérisé en ce que** ledit au moins un composant b) est choisi parmi :
- du polymère styrène anhydride maléique présent à hauteur de préférence d'au moins 15 % en poids, avantageusement d'au moins 20 % et plus avantageusement d'au moins 25 % en poids du sirop (méth)acrylique liquide total ;
ou
- du styrène, présent à hauteur de préférence d'au moins 15 % en poids, avantageusement d'au moins 20 % et plus avantageusement d'au moins 25 % en poids du sirop (méth)acrylique liquide total.

4. Sirop (meth)acrylique liquide selon la revendication 1 ou 3, caractérisé en qu'il comprend :
a) de 70% en poids à 80 % en poids d'un monomère (méth)acrylique,
b) de 20 % en poids à 30% en poids de styrène anhydride maléique.

5. Sirop (meth)acrylique liquide selon la revendication 1, 2 et 3, caractérisé en qu'il comprend :
a) de 50% en poids à 80 % en poids d'un monomère (méth)acrylique,
b) de 10 % en poids à 25% en poids de styrène,
c) de 10 à % en poids à 25 % en poids d'un polymère (méth)acrylique,

6. Sirop (meth)acrylique liquide selon la revendication 2 ou 5, **caractérisé en ce qu'**il comprend :
a) de 50% en poids à 80 % en poids d'un monomère (méth)acrylique,
b) de 10 % en poids à 45% en poids de styrène,
c) de 2,5 % en poids à 30 % en poids d'un polymère (méth)acrylique,
d) de 2,5% en poids à 30 % en poids d'un copolymère (méth) acrylique-styrène , comprenant de 10% à 50% en poids de styrène.

7. Sirop (meth)acrylique liquide selon la revendication 6 **caractérisé en ce qu'**il comprend :
a) de 50% en poids à 80 % en poids d'un monomère (méth)acrylique,
b) de 10 % en poids à 40% en poids de styrène.
c) de 5 % en poids à 30 % en poids d'un polymère (méth)acrylique,
d) de 5% en poids à 30 % en poids d'un copolymère (méth)acrylique-styrène, comprenant de 10% à 50% en poids de styrène,

8. Sirop (meth)acrylique liquide selon l'une quelconque des revendications précédentes, **caractérisé en ce que** le polymère (méth)acrylique est un homo- ou copolymère de méthacrylate de méthyle (MMA) ou un de leurs mélanges.

9. Sirop (meth)acrylique liquide selon l'une quelconque des revendications précédentes, **caractérisé en ce que** le copolymère de méthacrylate de méthyle (MMA) comprend au moins 70 %, de préférence au moins 80 %, avantageusement au moins 90 % et plus avantageusement au moins 95% en poids de méthacrylate de méthyle (MMA).

10. Sirop (meth)acrylique liquide selon l'une quelconque des revendications 2 à 9, **caractérisé en ce que** le polymère (méth)acrylique comprend un comonomère, ledit comonomère étant un acrylate d'alkyle contenant un groupe alkyle de 1 à 12 atomes de carbone.

11. Sirop (meth)acrylique liquide selon l'une quelconque des revendications précédentes, **caractérisé en ce que** le monomère (méth)acrylique est choisi parmi l'acide acrylique, l'acide méthacrylique, les monomères acryliques d'alkyle, les monomères méthacryliques d'alkyle et leurs mélanges, le groupe alkyle contenant de 1 à 22 carbones, linéaires, ramifiés ou cycliques ; le groupe alkyle contenant de préférence 1 à 12 carbones, linéaires, ramifiés ou cycliques.

12. Procédé d'imprégnation pour l'imprégnation d'un substrat fibreux, ledit substrat fibreux étant constitué de fibres de verre longues, et ledit procédé comprenant une étape d'imprégnation dudit substrat fibreux avec ledit sirop (méth)acrylique selon l'une des revendications 1 à 11.

13. Procédé d'imprégnation selon la revendication 12, **caractérisé en ce que** l'étape d'imprégnation dudit substrat fibreux est réalisée dans un moule fermé.

14. Matériau composite polymère transparent comprenant une matrice (méth)acrylique thermoplastique et un substrat fibreux utilisé comme renfort, dans lequel le substrat fibreux est constitué de fibres de verre longues, ledit matériau composite étant **caractérisé en ce que** la matrice (méth)acrylique thermoplastique est obtenue après polymérisation dudit substrat fibreux pré-imprégné dudit sirop (méth)acryique liquide selon l'une quelconque des revendiations 1 à 11.

15. Procédé de fabrication de pièces composites transparentes, comprenant les étapes suivantes :
a) l'imprégnation d'un substrat fibreux constitué de fibres de verre longues avec un sirop (méth)acrylique liquide selon l'une quelconque des revendications 1 à 11,
b) la polymérisation du sirop (méth)acrylique liquide imprégnant ledit substrat fibreux.

16. Procédé de fabrication selon la revendication 15, **caractérisé en ce que** l'imprégnation du substrat fibreux à l'étape a) est réalisée dans un moule fermé.

17. Procédé de fabrication selon l'une quelconque des revendications 15 à 16, **caractérisé en ce que** le procédé est choisi parmi le moulage par transfert de résine ou l'infusion.

18. Pièce mécanique ou structurelle transparente en matériau composite selon la revendication 14, ou obtenue par le procédé de fabrication selon les revendications 15 à 17.

19. Pièce selon la revendication 18, ladite pièce étant une pièce de construction de construction ou de bâtiment (façades, panneaux, toitures), d'automobile, une pièce de bateau, une pièce de train, un article de sport, une pièce d'avion ou d'hélicoptère, une pièce de vaisseau spatial ou de fusée, une pièce de module photovoltaïque, une pièce d'éolienne, une pièce de meuble, une pièce de téléphone ou de téléphone portable, une pièce d'ordinateur ou de télévision, une pièce d'imprimante et de photocopieuse.

## Patentansprüche

1. Flüssiger (Meth)acrylsirup zum Imprägnieren eines Fasersubstrats, wobei das Fasersubstrat aus langen Glasfasern mit einem Brechungsindex n1 besteht, wobei der Sirup zum Imprägnieren **dadurch gekennzeichnet ist, dass** er Folgendes umfasst:
a) ein (Meth)acryl-Monomer,
b) mindestens eine Komponente mit einem solchen Brechungsindex n3, dass n3 ≥ n1,
wobei der (Meth)acrylsirup einen Brechungsindex n4, der zu n1 tendiert, und eine dynamische Viskosität zwischen 10 mPa*s und 10.000 mPa*s, vorzugsweise zwischen 50 mPa*s und 5000 mPa*s und vorteilhafterweise zwischen 100 mPa*s und 1000 mPa*s aufweist; und dass die mindestens eine Komponente b) aus Folgendem ausgewählt ist:
- Styrol-Maleinsäureanhydrid-Polymer, das in einem Anteil von mindestens 10 Gew.-% des gesamten flüssigen (Meth)acrylsirups vorliegt, oder
- Styrol, das in einem Anteil von mindestens 10 Gew.-% des gesamten flüssigen (Meth)acrylsirups vorliegt.

2. Flüssiger (Meth)acrylsirup nach Anspruch 1, **dadurch gekennzeichnet, dass** er außerdem Folgendes umfasst:
c) ein (Meth)acryl-Polymer mit einem Brechungsindex n2.

3. Flüssiger (Meth)acrylsirup nach Anspruch 1 oder 2, **dadurch gekennzeichnet, dass** die mindestens eine Komponente b) aus Folgendem ausgewählt ist:
- Styrol-Maleinsäureanhydrid-Polymer, das in einem Anteil von vorzugsweise mindestens 15 Gew.-%, vorteilhafterweise mindestens 20 Gew.-% und noch vorteilhafter mindestens 25 Gew.-% des gesamten flüssigen (Meth)acrylsirups vorliegt, oder
- Styrol, das in einem Anteil von vorzugsweise mindestens 15 Gew.-%, vorteilhafterweise mindestens 20 Gew.-% und noch vorteilhafter mindestens 25 Gew.-% des gesamten flüssigen (Meth)acrylsirups.

4. Flüssiger (Meth)acrylsirup nach Anspruch 1 oder 3, **dadurch gekennzeichnet, dass** er Folgendes umfasst:
a) 70 Gew.-% bis 80 Gew.-% eines (Meth)acryl-Monomers,
b) 20 Gew.-% bis 30 Gew.-% Styrol-Maleinsäureanhydrid.

5. Flüssiger (Meth)acrylsirup nach Anspruch 1, 2 und 3, **dadurch gekennzeichnet, dass** er Folgendes umfasst:
a) 50 Gew.-% bis 80 Gew.-% eines (Meth)acryl-Monomers,
b) 10 Gew.-% bis 25 Gew.-% Styrol,
c) 10 bis Gew.-% bis 25 Gew.-% eines (Meth)acrylPolymers.

6. Flüssiger (Meth)acrylsirup nach Anspruch 2 oder 5, **dadurch gekennzeichnet, dass** er Folgendes umfasst:
a) 50 Gew.-% bis 80 Gew.-% eines (Meth)acryl-Monomers,
b) 10 Gew.-% bis 45 Gew.-% Styrol,
c) 2,5 Gew.-% bis 30 Gew.-% eines (Meth)acrylPolymers,
d) 2,5 Gew.-% bis 30 Gew.-% eines (Meth)acryl-Styrol-Copolymers, das 10 bis 50 Gew.-% Styrol umfasst.

7. Flüssiger (Meth)acrylsirup nach Anspruch 6, **dadurch gekennzeichnet, dass** er Folgendes umfasst:
a) 50 Gew.-% bis 80 Gew.-% eines (Meth)acryl-Monomers,
b) 10 Gew.-% bis 40 Gew.-% Styrol,
c) 5 Gew.-% bis 30 Gew.-% eines (Meth)acrylPolymers,
d) 5 Gew.-% bis 30 Gew.-% eines (Meth)acryl-Styrol-Copolymers, das 10 bis 50 Gew.-% Styrol umfasst.

8. Flüssiger (Meth)acrylsirup nach einem der vorhergehenden Ansprüche, **dadurch gekennzeichnet, dass** es sich bei dem (Meth)acryl-Polymer um ein Homo- oder Copolymer von Methylmethacrylat (MMA) oder eine Mischung davon handelt.

9. Flüssiger (Meth)acrylsirup nach einem der vorhergehenden Ansprüche, **dadurch gekennzeichnet, dass** das Copolymer von Methylmethacrylat (MMA) mindestens 70 Gew.-%, vorzugsweise mindestens 80 Gew.-%, vorteilhafterweise mindestens 90 Gew.-% und noch vorteilhafter mindestens 95 Gew.-% Methylmethacrylat (MMA) umfasst.

10. Flüssiger (Meth)acrylsirup nach einem der Ansprüche 2 bis 9, **dadurch gekennzeichnet, dass** das(Meth)acryl-Polymer ein Comonomer umfasst, wobei es sich bei dem Comonomer um ein Alkylacrylat mit einer Alkylgruppe mit 1 bis 12 Kohlenstoffatomen handelt.

11. Flüssiger (Meth)acrylsirup nach einem der vorhergehenden Ansprüche, **dadurch gekennzeichnet, dass** das (Meth)acryl-Monomer aus Acrylsäure, Methacrylsäure, Alkylacryl-Monomeren, Alkylmethacryl-Monomeren und Mischungen davon ausgewählt ist, wobei die Alkylgruppe 1 bis 22 lineare, verzweigte oder cyclische Kohlenstoffatome enthält,
wobei die Alkylgruppe vorzugsweise 1 bis 12 lineare, verzweigte oder cyclische Kohlenstoffatome enthält.

12. Imprägnierungsverfahren zum Imprägnieren eines Fasersubstrats, wobei das Fasersubstrat aus langen Glasfasern besteht und das Verfahren einen Schritt des Imprägnierens des Fasersubstrats mit dem (Meth)acrylsirup nach einem der Ansprüche 1 bis 11 umfasst.

13. Imprägnierungsverfahren nach Anspruch 12, **dadurch gekennzeichnet, dass** der Schritt der Imprägnierung des Fasersubstrats in einer geschlossenen Form durchgeführt wird.

14. Transparenter Polymerverbundwerkstoff, umfassend eine thermoplastische (Meth)acrylmatrix und ein als Verstärkung verwendetes Fasersubstrat, wobei das Fasersubstrat aus langen Glasfasern besteht, wobei der Verbundwerkstoff **dadurch gekennzeichnet ist, dass** die thermoplastische (Meth)acrylmatrix nach Polymerisation des mit dem flüssigen (Meth)-acrylsirup nach einem der Ansprüche 1 bis 11 vorimprägnierten Fasersubstrats erhalten wird.

15. Verfahren zur Herstellung von transparenten Verbundteilen, das die folgenden Schritte umfasst:
a) Imprägnieren eines Fasersubstrats, das aus langen Glasfasern besteht, mit einem flüssigen (Meth)acrylsirup nach einem der Ansprüche 1 bis 11,
b) Polymerisieren des das Fasersubstrat imprägnierenden flüssigen (Meth)acrylsirups.

16. Herstellungsverfahren nach Anspruch 15, **dadurch gekennzeichnet, dass** die Imprägnierung des Fasersubstrats in Schritt a) in einer geschlossenen Form durchgeführt wird.

17. Herstellungsverfahren nach einem der Ansprüche 15 bis 16, **dadurch gekennzeichnet, dass** das Verfahren aus Resin Transfer Molding oder Infusion ausgewählt wird.

18. Transparentes mechanisches Teil oder Bauteil aus Verbundwerkstoff nach Anspruch 14 oder erhalten durch das Herstellungsverfahren nach den Ansprüchen 15 bis 17.

19. Teil nach Anspruch 18, wobei es sich bei dem Teil um ein Konstruktions- oder Gebäudeteil (Fassaden, Platten, Bedachungen), ein Automobilteil, ein Bootsteil, ein Zugteil, einen Sportartikel, ein Flugzeug- oder Hubschrauberteil, ein Raumschiff-oder Raketenteil, ein Photovoltaikmodulteil, ein Windturbinenteil, ein Möbelteil, ein Telefon- oder Mobiltelefonteil, ein Computer- oder Fernseherteil, ein Druckerteil und ein Fotokopiererteil handelt.

## Claims

1. Liquid (meth)acrylic syrup for impregnating a fibrous substrate, said fibrous substrate consisting of long glass fibers of refractive index n1, said impregnation syrup being **characterized in that** it comprises:
a) a (meth)acrylic monomer,
b) at least one component, of refractive index n3, such that n3 ≥ n1,
said (meth)acrylic syrup having a refractive index n4 which tends toward n1 and a dynamic viscosity of between 10 mPa.s and 10 000 mPa.s, preferably between 50 mPa.s and 5000 mPa.s and advantageously between 100 mPa.s and 1000 mPa.s; **in that** said at least one component b) is chosen from:
- styrene-maleic anhydride polymer, present in a proportion of at least 10% by weight of the total liquid (meth)acrylic syrup; or
- styrene, present in a proportion of at least 10% by weight of the total liquid (meth)acrylic syrup.

2. Liquid (meth)acrylic syrup according to Claim 1, **characterized in that** it also comprises:
c) a (meth)acrylic polymer of refractive index n2.

3. Liquid (meth)acrylic syrup according to Claim 1 or 2, **characterized in that** said at least one component b) is chosen from:
- styrene-maleic anhydride polymer, present in a proportion preferably of at least 15% by weight, advantageously at least 20% and more advantageously at least 25% by weight of the total liquid (meth)acrylic syrup;
or
- styrene, present in a proportion preferably of at least 15% by weight, advantageously at least 20% and more advantageously at least 25% by weight of the total liquid (meth)acrylic syrup.

4. Liquid (meth)acrylic syrup according to Claim 1 or 3, **characterized in that** it comprises:
a) from 70% by weight to 80% by weight of a (meth)acrylic monomer,
b) from 20% by weight to 30% by weight of styrene-maleic anhydride.

5. Liquid (meth)acrylic syrup according to Claims 1, 2 and 3, **characterized in that** it comprises:
a) from 50% by weight to 80% by weight of a (meth)acrylic monomer,
b) from 10% by weight to 25% by weight of styrene,
c) from 10 to % by weight to 25% by weight of a (meth)acrylic polymer.

6. Liquid (meth)acrylic syrup according to Claim 2 or 5, **characterized in that** it comprises:
a) from 50% by weight to 80% by weight of a (meth)acrylic monomer,
b) from 10% by weight to 45% by weight of styrene,
c) from 2.5% by weight to 30% by weight of a (meth)acrylic polymer,
d) from 2.5% by weight to 30% by weight of a (meth)acrylic-styrene copolymer, comprising from 10% to 50% by weight of styrene.

7. Liquid (meth)acrylic syrup according to Claim 6, **characterized in that** it comprises:
a) from 50% by weight to 80% by weight of a (meth)acrylic monomer,
b) from 10% by weight to 40% by weight of styrene,
c) from 5% by weight to 30% by weight of a (meth)acrylic polymer,
d) from 5% by weight to 30% by weight of a (meth)acrylic-styrene copolymer, comprising from 10% to 50% by weight of styrene.

8. Liquid (meth)acrylic syrup according to any one of the preceding claims, **characterized in that** the (meth)acrylic polymer is a homo- or copolymer of methyl methacrylate (MMA) or a mixture thereof.

9. Liquid (meth)acrylic syrup according to any one of the preceding claims, **characterized in that** the copolymer of methyl methacrylate (MMA) comprises at least 70%, preferably at least 80%, advantageously at least 90% and more advantageously at least 95% by weight of methyl methacrylate (MMA).

10. Liquid (meth)acrylic syrup according to any one of Claims 2 to 9, **characterized in that** the (meth)acrylic polymer comprises a comonomer, said comonomer being an alkyl acrylate containing an alkyl group of 1 to 12 carbon atoms.

11. Liquid (meth)acrylic syrup according to any one of the preceding claims, **characterized in that** the (meth)acrylic monomer is chosen from acrylic acid, methacrylic acid, alkyl acrylic monomers and alkyl methacrylic monomers, and mixtures thereof, the alkyl group containing from 1 to 22 linear, branched or cyclic carbons; the alkyl group preferably containing from 1 to 12 linear, branched or cyclic carbons.

12. Impregnation process for impregnating a fibrous substrate, said fibrous substrate consisting of long glass fibers and said process comprising a step of impregnating said fibrous substrate with said (meth)acrylic syrup according to one of Claims 1 to 11.

13. Impregnation process according to Claim 12, **characterized in that** the step of impregnating said fibrous substrate is performed in a closed mold.

14. Transparent polymeric composite material comprising a thermoplastic (meth)acrylic matrix and a fibrous substrate used as reinforcement, in which the fibrous substrate consists of long glass fibers, said composite material being **characterized in that** the thermoplastic (meth)acrylic matrix is obtained after polymerization of said fibrous substrate preimpregnated with said liquid (meth)acrylic syrup according to any one of Claims 1 to 11.

15. Process for manufacturing transparent composite parts, comprising the following steps:
a) impregnating a fibrous substrate consisting of long glass fibers with a liquid (meth)acrylic syrup according to any one of Claims 1 to 11,
b) polymerizing the liquid (meth)acrylic syrup impregnating said fibrous substrate.

16. Manufacturing process according to Claim 15, **characterized in that** the impregnation of the fibrous substrate in step a) is performed in a closed mold.

17. Manufacturing process according to any one of Claims 15 to 16, **characterized in that** the process is chosen from resin transfer molding and infusion.

18. Transparent mechanical or structural part made of composite material according to Claim 14, or obtained via the manufacturing process according to Claims 15 to 17.

19. Part according to Claim 18, said part being a construction part of a construction or building (facades, panels, roofing), motor vehicle part, boat part, train part, sport article, plane or helicopter part, space ship or rocket part, photovoltaic module part, wind turbine part, furniture part, telephone or cellphone part, computer or television part, printer or photocopier part.
